# EUROPEAN PATENT SPECIFICATION

(11) **EP 2 017 805 B1**
(45) Date of publication and mention of the grant of the patent: **23.06.2010**
(21) Application number: 08159433.5
(22) Date of filing: 01.07.2008
(51) Int. Cl.: G08G 1/09, G08G 1/0968

(54) **Method of providing path information and device thereof**
Verfahren und Vorrichtung zur Bereitstellung von Streckeninformationen
Procédé et dispositif pour la fourniture d'informations de trajectoire

(30) Priority: 18.07.2007 KR 20070071573
(43) Date of publication of application: 21.01.2009
(73) Proprietor: LG Electronics Inc., Seoul 150-721 (KR)
(72) Inventor: Jung, Hyung Won, Gyeonggi-do Korea 451-713 (KR)
(74) Representative: Vossius & Partner

(56) References cited:
- EP-A- 1 076 431
- EP-A- 1 473 542
- EP-A- 1 717 552
- EP-A- 1 804 225

## Description

The document relates to a method of providing path information and device thereof, as known from EP 1 076 431 A2.

As the number of vehicles increases in society, traffic congestion is becoming more severe, particularly in areas where the increase rate of the number of vehicles is much faster than expanding rate of roads or other transportation infrastructure.

As one remedy for traffic congestion, the use of navigation systems is drawing much attention. A conventional navigation system receives navigation messages, transmitted by GPS (Global Positioning System) satellites, by using a GPS receiver, measures navigational movement of a vehicle by referring to inertial sensors such as gyroscope and velocity sensor installed in the vehicle, determines a current position of the vehicle in motion by combining navigation messages that the GPS receiver receives with a position estimate obtained from dead reckoning utilizing navigational movement signals of the vehicle that the inertial sensors provide, and displays the determined current position of the vehicle on a screen of a display unit with a map by representing the position in terms of map data format.

Therefore, by using a conventional navigation system, the user of a vehicle can identify a current position of the vehicle and a shortest path from the current position to a destination and effectively utilize a road system as he or she can plan a navigation path of the vehicle beforehand according to the guide of the navigation system and drive along the navigation path.

Conventionally, a traffic information providing server collects and provides traffic information while broadcasting of traffic information is being prepared such that a broadcast station collects traffic information, organizes the information according to TPEG (Transport Protocol Experts Group) standards, and broadcasts the information according to DMB (Digital Multimedia Broadcast) transmission standards.

A conventional navigation system has provided the user with an optimal path or a shortest path by making use of received traffic information.

In one aspect, a device, computer program product, and method of providing path information comprises receiving broadcast signals comprising traffic information and cost information, extracting and storing traffic information and cost information from received broadcast signals, requesting information about a navigation path after receiving a first position and a second position, and searching for paths leading to the second position from the first position and calculating cost required to reach the second position from the first position based on traffic information and cost information of each searched path and displaying the cost.

In another aspect, a device of providing path information comprises a display unit, a broadcast signal receiver configured to receive broadcast signal comprising traffic information and cost information, an information extraction unit configured to extract the traffic information and the cost information from the received broadcast signals, an input unit configured to receive a first position and a second position and to receive a request for information about a navigation path, and a controller configured to search reachable paths from the first position to the second position at the request for a navigation path from the input unit and to calculate cost required to reach the second position from the first position based on the traffic information and the cost information of each searched path and to display the cost on the display unit.

The present invention is described in detail with reference to the following drawings in which like numerals refer to like elements.

FIG. 1 illustrates a simplified structure of a traffic information providing system;

FIG. 2 illustrates a block diagram of a navigation terminal;

FIG. 3 illustrates a format of traffic information transmitted wirelessly;

FIG. 4 illustrates a flow diagram of a method for providing path information;

FIG. 5 illustrates an input screen for vehicle information;

FIG. 6 illustrates a flow diagram describing S445 step of FIG. 4 more specifically; and

FIG. 7 illustrates a path information screen comprising required distance, required time, and required cost for each path.

Hereinafter, the preferred embodiments of the present invention are described in detail with reference to the attached drawings.

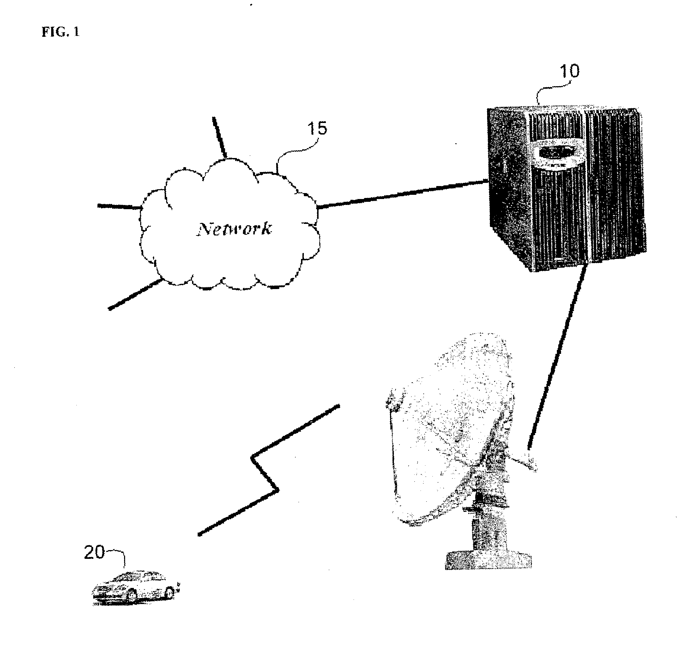

FIG. 1 illustrates a simplified structure of a traffic information providing system.

With reference to FIG. 1, a traffic information providing system comprises network 5, a server 10, a broadcast station 15, and a vehicle 20.

Network 5 comprises wired and wireless communications network such as LAN (Local Area Network) and WAN (Wide Area Network). A variety of traffic information is collected through network 5 and collected information is processed at the server 10 according to TPEG standards and transmitted to the broadcast station 15. Subsequently, the broadcast station 15 inserts traffic information processed according to TPEG standards into broadcast signals and broadcasts the signals to the vehicle 20.

The server 10 reorganizes additional information such as traffic information, toll information, and fuel price information collected through various sources connected to the network 5 according to TPEG standards and transmits to the broadcast station 15. The broadcast station 15 puts the additional information in broadcast signals and transmits wirelessly so that a terminal installed in the vehicle 20 such as a navigation terminal can receive the information.

Traffic information can include information about various traffic conditions required for road, ocean, and air service such as accidents, road conditions, traffic congestion, road construction, road blockage, delay in public road network, and delay in air service.

Fuel price information represents average price for every liter of vehicle fuel (e.g., gasoline, diesel, and LNG). Since in general, average price for every liter of vehicle fuel fluctuates according to a region and time, average value of fluctuating prices is transmitted.

Toll information applies only to a toll road such as expressway. When tolls are changed, updated toll information is included in broadcast signals and thus transmitted.

The broadcast station 15 receives traffic information, fuel price information, and toll information processed at the server 10 and transmits the received information to the vehicle 20 in the form of digital signals compliant to various digital broadcasting standards. In this case, broadcasting standards comprises various digital broadcast standards such as European digital audio broadcasting (DAB) standards based on EUREKA-147 [ETSI EN 300 401], terrestrial or satellite digital multimedia broadcasting (DMB) standards, terrestrial digital video broadcasting (DVB-T) standards, handheld digital video broadcasting (DVB-H) standards, and MFLO (Media Forward Link Only) standards.

Also, the broadcast station 15 can transmit traffic information, toll information, and fuel price information through wired and wireless network such as wired and wireless Internet.

The vehicle 20 implies any possible vehicle such as an automobile/car, bus, train, ship, airplane or other device used for the transport of persons or goods. For the purposes of illustration only, the vehicle described below may be considered an automobile.

The vehicle 20 carries a navigation terminal, receives TPEG data from the broadcast station 15 by using the terminal, processes received data, and transfers the processed data to the user through graphic, text, and/or audio.

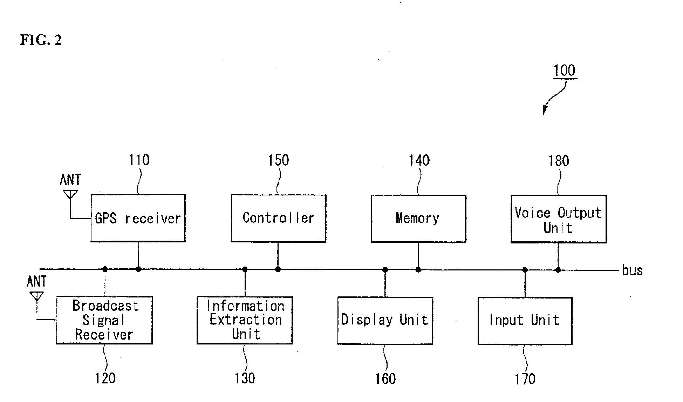

FIG. 2 illustrates a block diagram of a navigation terminal.

The terminal 100 can be classified into in-dash type or on-dash type depending on how the terminal 100 is installed in the vehicle 20. An in-dash type terminal is the one that is firmly installed being inserted in a space assigned in a dashboard of the vehicle 20. An on-dash type terminal is either attached on a dash board or installed by using a dedicated mount near the dash board; since an on-dash type terminal can be detached or attached, the on-dash type terminal thus can be carried separated from the vehicle 20, being called a portable navigation device.

The terminal 100 comprises in-vehicle information terminals of the above in-dash and on-dash type. In addition to the in-vehicle information terminal, the terminal 100 further comprises all kinds of information processing devices capable of receiving and/or processing of traffic information and capable of carrying out a navigation function inside a vehicle in association with a GPS receiver receiving navigation messages transmitted from GPS satellites.

Referring to FIG. 2, the terminal 100 comprises a GPS receiver 100, a broadcast signal receiver 120, an information extraction unit 130, memory 140, a controller 150, a display unit 160, an input unit 170, and a voice output unit 180.

The GPS receiver 100 receives navigation messages that GPS satellites transmit through an antenna (ANT) and delivers received navigation messages to the controller 150. Subsequently, based on navigation messages, the terminal 100 can control the movement of the vehicle 20 to which the terminal 100 is attached.

The broadcast signal receiver 120, by using the antenna (ANT), receives from the broadcast station 15 broadcast signals comprising traffic information provided from the server 10. Broadcast signals that the broadcast signal receiver 120 receives comprise not only video and audio data compliant to various specifications of the aforementioned terrestrial or satellite digital multimedia broadcasting (DMB), digital audio broadcasting (DAB), digital video broadcasting (DVB-T, DVB-H) but also traffic information corresponding to TPEG service or BIFS (Binary Format for Scene) service and additional information such as various additional data.

The broadcast signal receiver 120 resonates at the required frequency band of received traffic information signals and demodulates resonated signals and outputs the demodulated signals.

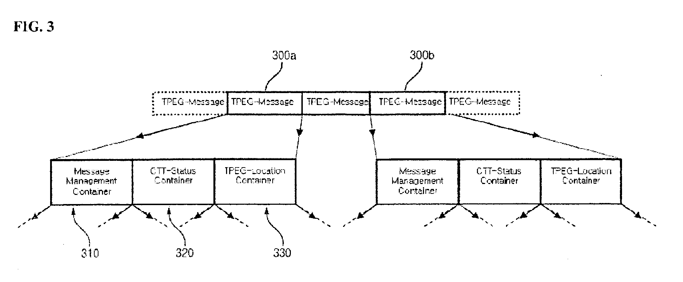

The information extraction unit 130 receives demodulated signals from the broadcast signal receiver 120 and decodes the demodulated signals into a TPEG message sequence composed as shown in FIG. 3. The information extraction unit 130 then interprets each TPEG message in the sequence and delivers traffic information and additional information such as toll information, fuel price information, and the like contained in the message to the controller 150. The controller 150 can store delivered traffic information and additional information (e.g., toll information, fuel price information, and the like) in the memory 140.

The memory 140 comprises non-volatile memory storing programs and data required to carry out various functions provided by the terminal 100 and volatile memory storing various temporary data generated according to the operation of the terminal 100.

Non-volatile memory stores various data required for selecting an optimal path to reach a destination. For example, the memory 140, by storing road section traffic information, toll information, fuel price information, and the like extracted from the information extraction unit 130, enables to quickly read out and use the stored information during a path search stage of the vehicle 20.

The memory 140 stores gas mileage information of a vehicle corresponding to vehicle information (e.g., engine displacement information and vehicle year information) in the form of a look-up table. For example, gas mileage information in accordance with engine displacement and vehicle year is stored in the form of a look-up table.

Also, the memory 140 stores map data required for driving the vehicle 20 based on navigation messages received from the GPS receiver 110. Map data comprises a map represented by graphs and various geographic data comprising intersections with other roads or road junctions such as interchanges, road sections connecting respective interchanges, section distance, and topographic information.

When the terminal 100 does not store map data in the form of an electronic map due to limited capacity, the aforementioned geographic data except for the map represented by graphs can be stored in the memory 140 in the form of a text.

At this point, a road section comprises one or more than one road unit that a vehicle should pass to reach a destination and hereinafter, a road section connecting one junction to another is defined as a link.

A road section between a starting position and a destination can comprise one or more than one link. A link refers to a road section between two road junctions and a vehicle 20 that has entered the link cannot branch off until the vehicle 20 meets the next junction.

Each link in the map data is identified by a link identifier. A link identifier can use latitudes and longitude of the starting and end point of the corresponding link or letters, numerals, or a combination of both containing the link name.

The controller 150 includes a processor that processes various data fed to the terminal 100 and controls overall operation of the terminal 100.

The controller 150, according to navigation functions, retrieves, from the memory 140, map data comprising a current position of the vehicle 20 and other various positions such as a starting position and a destination based on navigation messages received by the GPS receiver 110 and searches all the possible paths to the destination.

In one embodiment, the controller 150 calculates distance, time, and cost associated with a searched path by using traffic information and additional information (e.g., fuel price information and toll information) extracted by the information extraction unit 130 and displays the calculated result on the display unit 160.

The display unit 160, according to the control of the controller 150, displays a current position, traffic information, and a navigation path of the vehicle 20 on the map data read out from the memory 140 according to navigation messages received by the GPS receiver 110.

The display unit 160 is realized by a display device such as liquid crystal display (LCD) and displays video signals fed from the controller 150. At the same time, besides the display function, the display unit 160 can be realized by a touch screen so that various functions provided by a traffic information receiving terminal 100 are displayed in the form of a menu and a menu selected by a touch of the user's finger or a stylus pen is carried out.

In one embodiment, the display unit 160 displays a vehicle information input screen for receiving vehicle information from the user. Also, the display unit 160 displays a path information screen comprising information of distance, time, and cost of a path searched by the control of the controller 150.

The input unit 170 receives various operation commands from the user and provides the commands to the controller 150. The input unit 170 can be realized by more than one form from among a key input unit comprising at least one numeral key or functional key, a touch pad that receives information input from the user's touch, and a remote controller that can be embedded in the driving wheel of the vehicle 20 for the convenience of operation of the terminal 100.

In one embodiment, the input unit 170 receives vehicle information comprising engine displacement information and vehicle year information from the user and provides the vehicle information for the controller 150. Also, the input unit 170 receives a particular path selected from the user and provides the selected path to the controller 150.

The voice output unit 180 generates audio signals for voice guide about a path under the control of the controller 150 and amplifies the generated audio signals by a predetermined level selected through the input unit 170 and outputs the amplified audio signals through one or more than one speaker (not shown).

FIG. 3 illustrates a format of traffic information transmitted wirelessly.

Referring to FIG. 3, the traffic information format, that the traffic information providing server 10 wirelessly transmits, comprises a sequence of message segments (hereinafter, a message segment is called 'TPEG (Transport Protocol Experts Group) message').

A message segment among a sequence of message segments, namely a TPEG message 300A is applied to more than one application. For example, a TPEG message 300A can be a message associated with TPEG-Congestion and Travel-Time information (CTT) Application whereas another TPEG message 300B can be a message associated with TPEG-Road Traffic Message Application comprising accident and unexpected situation information, TPEG-Public Transport Information Application, or TTI Safety Driving Information (SDI) service for Digital Multimedia Broadcasting (DMB).

To each TPEG application, a unique identifying number which is called application identification (AID) is assigned. The AID is used to decode received TPEG messages by using the most appropriate application decoder. The AID of 0010 (hex) is assigned to TPEG-CTT application.

TPEG-CTT application targets road users as primary objects of information provision and provided information comprises transit information on a road network, degree of delay, and transit time, which influence road usage.

A TPEG message 300A delivering a CTT (Congestion and Travel-Time information) message comprises a message management container 310, application status container 320, and a TPEG location container 330.

In one embodiment, the application status container 320 of a TPEG message 300A implies a TPEG-CTT container. According to the type of a TPEG message application, the contents of application status container 320 are changed. For example, in case of a road traffic message application, the application status container 320 becomes an RTM-event container, while the application status container 320 can become an SDI-event container in case of an SDI service application.

Since a TPEG message 300B for delivering different traffic information from the aforementioned TPEG CTT message can also be included in a TPEG message sequence, more than two applications can be included in a single TPEG message stream.

The message management container 310 necessarily includes a message identifier (MID) and a version number. Also, a message management container 310 can include date and time element and message creation time.

Elements included in the message management container 310 are used for managing information received from a TPEG decoder. However, as for date and time element of the message management container 310, different from other applications of TPEG (applications of accident and unexpected situation information and public transportation information), start time and end time, message deletion time, and schedule information are not transmitted in a CTT application.

Current traffic congestion status information and predicted traffic congestion status information of each link (road section) are created and included in the application status container 320, namely the TPEG-CTT container 320. Description of status information in the application status container 320 utilizes a hierarchical structure, which is to secure expansion of specifications and device compatibility according to addition of components.

In one embodiment, toll information and fuel price information are transmitted being contained in the TPEG-CTT container 320. In another implementation, toll information and fuel price information can be transmitted being contained in an SDI event container.

In addition to a safety driving position component, a safety driving segment component, and a road service facility (RSF) component, an SDI event container includes an economic driving component newly defined in the embodiment and can further include a validation component.

A safety driving position component describes information about a particular position associated with safe driving such as an accident black spot and an over-speed caution position. A safety driving segment component describes information about a particular segment associated with safe driving such as a sharp turn segment and a freezing caution area. An RSF component describes information about traffic convenience facilities required for safe driving on the road. A validation component implies information about the number of all messages comprising an SDI message and is used when the total number of SDI messages should be provided to a receiver.

An economic driving component can include update time, fuel identifier, and toll information. The fuel identifier comprises fuel information code and price information for every fuel information code.

Table 1 illustrates an economic driving component.

**[Table 1]**

| | |
|---|---|
| <SDI_component (83)>:= | :EDC |
| <intunti>(id), | :identifier, id = 83 hex |
| <intunti>(n), | :Length of component data in byte |
| m*<EDC_component()>; | :EDC_component |

Referring to Table 1, an economic driving component has an identifier '83h' and m EDC components and has a field expressing the entire data length in units of byte.

Each EDC component included in an economic driving component carries information of update time, fuel ID, and toll ID by the format illustrated in Table 2 through Table 4. An identifier '00' is assigned to update time and an identifier '01' is assigned to fuel ID and an identifier '02' is assigned to toll ID.

**[Table 2]**

| | |
|---|---|
| <EDC_component (00)>:= | :Update Time |
| <intunti>(id), | :identifier, id = 00 hex |
| <intunti>(n), | :Length of component data in byte |
| <time_t>(update_time); | :update time information |

**[Table 3]**

| | |
|---|---|
| <EDC_component (01)>:= | :Fuel ID |
| <intunti>(id), | :identifier, id = 01 hex |
| <intunti>(n), | :Length of component data in byte |
| <sdi03>, | :Fuel Code |
| n*<sdi_message>, | :Price for each fuel code |

**[Table 4]**

| | |
|---|---|
| <EDC_component (02)>: = | :Toll ID |
| <intunti>(id), | :identifier, id = 02 hex |
| <intunti>(n), | :Length of component data in byte |
| <intunti>(link); | :link requiring update (link code) |
| <intunti>(number); | :number of update |
| n*<sdi_message>, | :update contents |

Meanwhile, fuel code in Table 3 can be defined as follows.

**[Table 5]**

| SDI_03 Fuel Code | | | |
|---|---|---|---|
| Code | Word | | |
| 0 | No Update | | |
| 1 | Gasoline | | |
| 2 | Diesel | | |
| 3 | Bio-fuel | | |
| 4 | LPG | | |
| 5 | | | |
| 6 | | | |

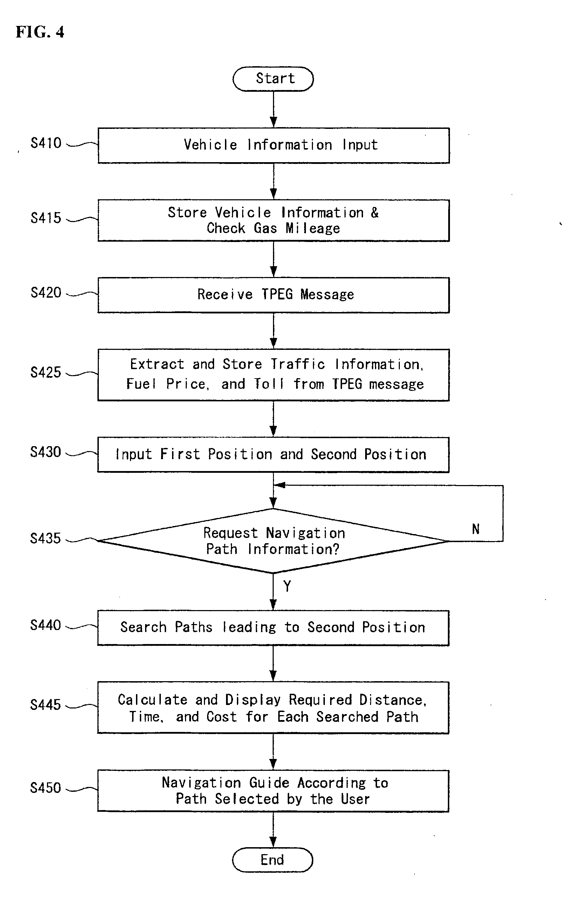

FIG. 4 illustrates a flow diagram of a method and corresponding computer program product for providing path information.

Referring to FIG. 4, first, vehicle information is input through the input unit 170 by the user.

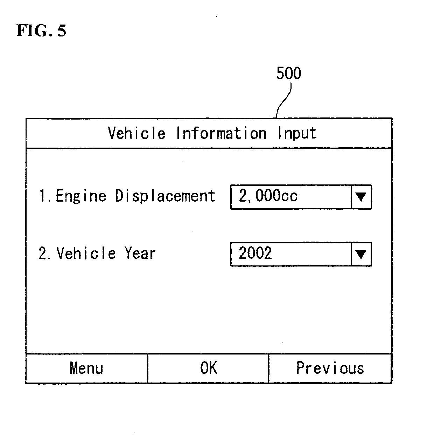

FIG. 5 illustrates an input screen for vehicle information.

Referring to FIG. 5, the user enters engine displacement information and vehicle year information in a vehicle information input screen 500. FIG. 5 illustrates a case where the user selects 2,000 cc displacement and vehicle year of 2002 as vehicle information.

As described above, when the user inputs vehicle information such as engine displacement information and vehicle year information, the controller 150 stores input vehicle information in the memory 140 and at the same time, checks gas mileage information corresponding to the input vehicle information in the memory 140, setting up the checked gas mileage information as basic gas mileage information S415.

In other words, in one embodiment, since the memory 140 stores gas mileage information corresponding to engine displacement and vehicle year information in the form of a look-up table, the controller 150 can check gas mileage information.

When broadcast signals including TPEG messages are received from a broadcast station S420, the information extraction unit 130 extracts from the TPEG messages traffic information for each link, toll information for each link, and fuel price information and stores the extracted information in the memory 140, S425.

At this time, toll information for each link and fuel price information is transmitted by either being included in a congestion and travel time information (CTT) message as described earlier or being included in an event container of an SDI message.

If a first position and a second position are input through the input unit 170 by the user S430 and information provision for a navigation path from the first position to the second position is requested S435, the controller 150 searches paths leading to the second position S440. In one embodiment, the first position can be a current position of a vehicle or a starting position and the second position can be a way position or a destination.

At S440 step, the controller 150 reads out map data stored in the memory 140 and searches all the paths leading to the second position from the first position by using navigation messages received from the GPS receiver 110.

The controller 150 calculates distance, time, and cost required to reach from the first position to the second position with respect to each of searched paths and displays the calculated result S445.

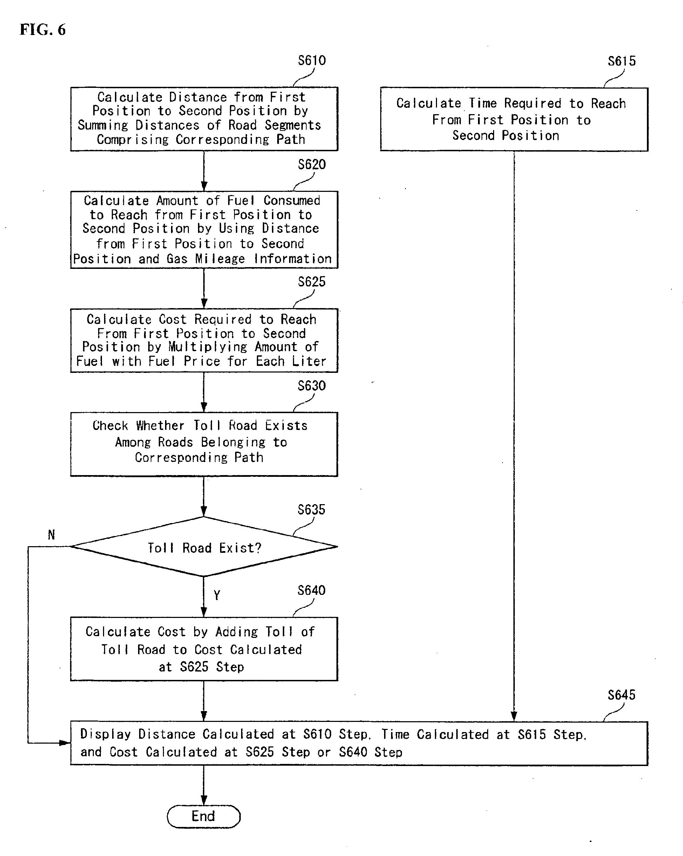

FIG. 6 illustrates a flow diagram describing S445 step of FIG. 4 more specifically.

Referring to FIG. 6, distance from a first position to a second position of a particular path is calculated by summing individual distances of links comprising the corresponding path S610.

Also, time required to reach a second position from a first position of a particular path is calculated by link average time, link predicted average time, or a combination of both, or link average speed, link predicted average speed, or a combination of both S615.

Similarly, the controller 150 calculates cost for each path according to a method below. Namely, the control unit 150 calculates the amount of fuel consumed to reach to a second position from a first position by using the calculated distance from the first position to the second position and gas mileage information of a vehicle S620. At this time, the unit of calculated amount of fuel can be liter (L).

For example, if the distance from a first position to a second position is about 30 km and gas mileage of a vehicle is 12 km/L, the controller 150 calculates the amount of fuel consumed to reach from the first position to the second position by dividing the distance from the first position to the second position by gas mileage. In this case, the amount of fuel is 30/12 = 2.5 L.

When the amount of fuel consumed to reach from a first position to a second position is calculated, the controller 150 calculates cost required to reach from the first position to the second position by multiplying fuel price information for every liter with the amount of fuel consumed to reach from the first position to the second position S625.

Subsequently, the controller 150 checks whether a toll road exists among roads belonging to the corresponding path S630 and if a toll exists (S635=Y), the controller 150 adds the toll of the corresponding toll road to the cost calculated at S625 step, thus calculating cost required to reach from a first position to a second position S640.

The above procedure is applied to all the paths searched at S440 step of FIG. 6. After the above procedure has been applied to all the paths, distance, time, and cost required to reach from a first position to a second position are output for each individual path.

In other words, the controller 150 can output distance calculated at S610 step, time calculated at S615 step, and cost calculated at S625 step or S640 step to the display unit 160,S645.

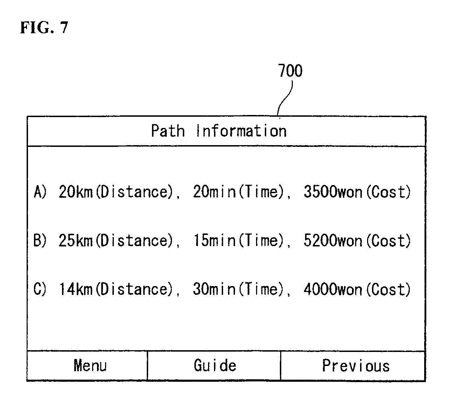

FIG. 7 illustrates a path information screen comprising required distance, required time, and required cost for each path.

Referring to FIG. 7, from a path information screen 700, path A requires a distance of 20 km, time of 20 minutes, and cost of 3500 won while path B requires a distance of 25 km, time of 15 minutes, and cost of 5200 won. Also, path C requires a distance of 14 km, time of 30 minutes, and cost of 4500 won.

Accordingly, the user can check information about distance, time, and cost required to reach from a first position to a second position. Namely, if the user wants to arrive at a destination in a shortest time irrespective of cost, the user can choose path B on the path information screen 700. On the contrary, if the user wants to arrive at the destination with a smallest cost, the user can choose path A on the path information screen 700.

In the implementation described above, the path information screen 700 has been describe to display a distance, time, and cost of searched paths together, however, only cost of searched paths can be displayed.

In this way, if a path is selected by the user, the controller 150 starts navigation guide according to the path selected by the user S450.

As described above, one embodiment can provide the user with not only a path requiring a shortest time but also a path requiring a smallest cost.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. In some cases, such embodiments are implemented by controller.

For a software implementation, the embodiments described herein may be implemented with separate software modules, such as procedures and functions, each of which perform one or more of the functions and operations described herein. The software codes can be implemented with a software application written in any suitable programming language and may be stored in memory and executed by a controller or processor.

Although embodiments have been described with reference to a number of illustrative embodiments thereof, it should be understood that numerous other modifications and embodiments can be devised by those skilled in the art that will fall within the scope of the principles of this disclosure as defined in the appended claims. More particularly, various variations and modifications are possible in the component parts and/or arrangements of the subject combination arrangement within the scope of the disclosure, the drawings and appended claims. In addition to variations and modifications in the component parts and/or arrangements, alternative uses will also be apparent to those skilled in the art.

## Claims

1. A method, comprising:
receiving broadcast signals comprising traffic information and cost information; extracting and storing the traffic information and cost information from the received broadcast signals;
requesting information about possible navigation paths between a first position and a second position;
identifying at least one path leading to the second position from the first position; calculating a cost associated with each path of the at least one path based on corresponding traffic information and cost information; and
displaying at least one calculated cost.

2. The method of claim 1, wherein the first position is a current position or a start position, and the second position is a destination or a way position.

3. The method of claim 1 or 2, further comprising:
calculating a distance and time required to reach the second position from the first position for each path of the at least one path based on corresponding traffic information; and
displaying at least one calculated distance and time.

4. The method of claim 1, 2 or 3, further comprising:
receiving vehicle information; and
determining gas mileage information corresponding to the vehicle information.

5. The method of claim 4, further comprising:
storing the vehicle information and the gas mileage information, wherein
the vehicle information includes engine displacement information and vehicle year information, and
the step of determining the gas mileage information corresponding to the vehicle information includes referring to a lookup table pre-stored in memory.

6. The method of claim 4 or 5, further comprising:
calculating a distance and time required to reach the second position from the first position for each path of the at least one path based on corresponding traffic information,
wherein
the cost information comprises fuel price information, and
the step of calculating a cost associated with each path includes:
calculating an estimated amount of fuel to be consumed based on the calculated distance, and
calculating a corresponding fuel cost based on the fuel price information and the estimated amount of fuel.

7. The method of claim 6, wherein
the cost information further comprises toll information of each path; and
the step of calculating a cost associated with each path includes adding the toll information to the calculated fuel cost.

8. A device (100) comprising:
a display unit (160);
a broadcast signal receiver (120) configured to receive broadcast signals comprising traffic information and cost information;
an information extraction unit (130) configured to extract the traffic information and the cost information from the received broadcast signals;
an input unit (170) configured to receive a first position and a second position and to receive a request for information about a navigation path; and
a controller (150) configured to
identify at least one path leading to the second position from the first position,
calculate a cost associated with each path of the at least one path based on corresponding traffic information and cost information, and
display at least one calculated cost.

9. The device of claim 8, wherein
the first position is a current position or a start position, and
the second position is a destination or a way position.

10. The device of claim 8 or 9, wherein the controller is configured to
calculate a distance and time required to reach the second position from the first position for each path of the at least one path based on corresponding traffic information, and
display at least one calculated distance and time.

11. The device of claim 8, 9 or 10, further comprising:
a memory (140) configured to store vehicle information, wherein
the controller is configured to determine gas mileage information corresponding to vehicle information in the memory.

12. The device of claim 11, wherein the vehicle information comprises engine displacement information and vehicle year information.

13. The device of claim 11 or 12, wherein
the controller is configured to calculate a distance and time required to reach the second position from the first position for each path of the at least one path based on corresponding traffic information,
the cost information comprises fuel price information, and
the controller is configured to
calculate an estimated amount of fuel to be consumed based on the calculated distance, and
calculate a corresponding fuel cost based on the fuel price information and the estimated amount of fuel.

14. The device of claim 13, wherein
the cost information further comprises toll information of each path, and
the controller is configured to calculate the cost associated with each path by adding the toll information to the calculated fuel cost.

## Patentansprüche

1. Verfahren mit den Schritten:
Empfangen von Rundsendesignalen, die Verkehrsinformation und Kosteninformation enthalten;
Extrahieren und Speichern der Verkehrsinformation und der Kosteninformation von den empfangenen Rundsendesignalen;
Anfordern von Information über mögliche Navigationsstrecken zwischen einer ersten Position und einer zweiten Position;
Identifizieren mindestens einer von der ersten Position zur zweiten Position führenden Strecke;
Berechnen eines mit jeder Strecke unter der mindestens einen Strecke in Beziehung stehenden Kostenaufwandes basierend auf der entsprechenden Verkehrsinformation und Kosteninformation; und
Darstellen des mindestens einen berechneten Kostenaufwandes.

2. Verfahren nach Anspruch 1, wobei die erste Position eine Ist-Position oder eine Startposition und die zweite Position eine Zielposition oder ein Wegepunkt ist.

3. Verfahren nach Anspruch 1 oder 2, ferner mit den Schritten:
Berechnen einer Wegstrecke und einer Zeit, die zum Erreichen der zweiten Position ausgehend von der ersten Position benötigt werden, für jede Strecke unter der mindestens einen Strecke basierend auf entsprechender Verkehrsinformation; und
Darstellen mindestens einer berechneten Wegstrecke und Zeit.

4. Verfahren nach Anspruch 1, 2 oder 3, ferner mit den Schritten:
Empfangen von Fahrzeuginformation; und
Bestimmen von der Fahrzeuginformation entsprechender Kraftstoffverbrauchsinformation.

5. Verfahren nach Anspruch 4, ferner mit dem Schritt:
Speichern der Fahrzeuginformation und der Kraftstoffverbrauchsinformation, wobei
die Fahrzeuginformation Motorhubrauminformation und Fahrzeugbaujahrinformation enthält; und
der Schritt zum Bestimmen der Kraftstoffverbrauchsinformation gemäß der Fahrzeuginformation die Bezugnahme auf eine in einem Speicher vorgespeicherte Lookup-Tabelle aufweist.

6. Verfahren nach Anspruch 4 oder 5, ferner mit dem Schritt zum Berechnen einer Wegstrecke und einer Zeit, die zum Erreichen der zweiten Position ausgehend von der ersten Position benötigt werden, für jede Strecke unter der mindestens einen Strecke basierend auf entsprechender Verkehrsinformation, wobei
die Kosteninformation Kraftstoffpreisinformation aufweist, und
wobei der Schritt zum Berechnen eines mit jeder Strecke in Beziehung stehenden Kostenaufwandes aufweist:
Berechnen einer geschätzten zu verbrauchenden Kraftstoffmenge basierend auf der berechneten Wegstrecke, und
Berechnen entsprechender Kraftstoffkosten basierend auf der Kraftstoffpreisinformation und der geschätzten Kraftstoffmenge.

7. Verfahren nach Anspruch 6, wobei
die Kosteninformation ferner Mautinformation für jede Strecke aufweist, und
der Schritt zum Berechnen eines mit jeder Strecke in Beziehung stehenden Kostenaufwandes das Hinzuaddieren der Mautinformation zu den berechneten Kraftstoffkosten aufweist.

8. Vorrichtung (100) mit:
einer Displayeinheit (160);
einem Rundsendesignalempfänger (120), der dafür konfiguriert ist, Rundsendesignale zu empfangen, die Verkehrsinformation und Kosteninformation aufweisen;
einer Informationsextraktionseinheit (130), die dafür konfiguriert ist, die Verkehrsinformation und die Kosteninformation von den empfangenen Rundsendesignalen zu extrahieren;
einer Eingabeeinheit (170), die dafür konfiguriert ist, eine erste Position und eine zweite Position zu empfangen und eine Anforderung für Information über eine Navigationsstrecke zu empfangen; und
einem Controller (150), der dafür konfiguriert ist
mindestens eine von der ersten Position zur zweiten Position führende Strecke zu identifizieren,
einen mit jeder Strecke unter der mindestens einen Strecke in Beziehung stehenden Kostenaufwand basierend auf entsprechender Verkehrsinformation und Kosteninformation zu berechnen, und
mindestens einen berechneten Kostenaufwand darzustellen.

9. Vorrichtung nach Anspruch 8, wobei
die erste Position eine Ist-Position oder eine Startposition ist, und
die zweite Position eine Zielposition oder ein Wegepunkt ist.

10. Vorrichtung nach Anspruch 8 oder 9, wobei der Controller dafür konfiguriert ist,
eine Wegstrecke und eine Zeit, die zum Erreichen der zweiten Position ausgehend von der ersten Position benötigt werden, für jede Strecke unter der mindestens einen Strecke basierend auf entsprechender Verkehrsinformation zu berechnen, und
mindestens eine berechnete Wegstrecke und Zeit darzustellen.

11. Vorrichtung nach Anspruch 8, 9 oder 10, ferner mit:
einem Speicher (140), der dafür konfiguriert ist, Fahrzeuginformation zu speichern, wobei
der Controller dafür konfiguriert ist, der Fahrzeuginformation im Speicher entsprechende Kraftstoffverbrauchsinformation zu bestimmen.

12. Vorrichtung nach Anspruch 11, wobei die Fahrzeuginformation Motorhubrauminformation und Fahrzeugbaujahrinformation aufweist.

13. Vorrichtung nach Anspruch 11 oder 12, wobei
der Controller dafür konfiguriert ist, eine Wegstrecke und eine Zeit, die zum Erreichen der zweiten Position ausgehend von der ersten Position benötigt werden, für jede Strecke unter der mindestens einen Strecke basierend auf entsprechender Verkehrsinformation zu berechnen,
die Kosteninformation Kraftstoffpreisinformation aufweist, und
der Controller dafür konfiguriert ist,
eine geschätzte zu verbrauchende Kraftstoffmenge basierend auf der berechneten Wegstrecke zu berechnen, und
entsprechende Kraftstoffkosten basierend auf der Kraftstoffpreisinformation und der geschätzten Kraftstoffmenge zu berechnen.

14. Vorrichtung nach Anspruch 13, wobei
die Kosteninformation ferner Mautinformation für jede Strecke aufweist, und
der Controller dafür konfiguriert ist, den mit jeder Strecke in Beziehung stehenden Kostenaufwand durch Hinzuaddieren der Mautinformation zu den berechneten Kraftstoffkosten zu berechnen.

## Revendications

1. Procédé comportant les étapes ci-dessous consistant à :
recevoir des signaux de radiodiffusion comportant des informations connexes au trafic et des informations connexes aux coûts ;
extraire et stocker les informations connexes au trafic et les informations connexes aux coûts à partir des signaux de radiodiffusion reçus ;
demander des informations sur des itinéraires de navigation possibles entre une première position et une seconde position ;
identifier au moins un itinéraire menant à la seconde position depuis la première position ;
calculer un coût associé à chaque itinéraire dudit au moins un itinéraire sur la base d'informations connexes au trafic et d'informations connexes aux coûts correspondantes ; et
afficher au moins un coût calculé.

2. Procédé selon la revendication 1, dans lequel la première position est une position en cours ou une position de départ, et la seconde position est une destination ou une position intermédiaire.

3. Procédé selon la revendication 1 ou 2, comportant en outre les étapes ci-dessous consistant à :
calculer une distance et un temps requis pour atteindre la seconde position à partir de la première position pour chaque itinéraire dudit au moins un itinéraire sur la base des informations connexes au trafic correspondantes ; et
afficher au moins une distance calculée et un temps calculé.

4. Procédé selon la revendication 1, 2 ou 3, comportant en outre les étapes ci-dessous consistant à :
recevoir des informations connexes au véhicule ; et
déterminer des informations connexes à la consommation de carburant correspondantes aux informations connexes au véhicule.

5. Procédé selon la revendication 4, comportant en outre les étapes ci-dessous consistant à :
stocker les informations connexes au véhicule et les informations connexes à la consommation de carburant, dans lequel
les informations connexes au véhicule incluent des informations connexes à la cylindrée et des informations connexes à l'âge du véhicule ; et
l'étape de détermination des informations connexes à la consommation de carburant correspondantes aux informations connexes au véhicule comporte l'étape consistant à interroger une table de consultation pré-stockée dans une mémoire.

6. Procédé selon la revendication 4 ou 5, comportant en outre les étapes ci-dessous consistant à :
calculer une distance et un temps requis pour atteindre la seconde position à partir de la première position pour chaque itinéraire dudit au moins un itinéraire sur la base d'informations connexes au trafic correspondantes, dans lequel
les informations connexes aux coûts comprennent des informations connexes au prix des carburants, et
l'étape consistant à calculer un coût associé à chaque itinéraire comprend les étapes ci-dessous consistant à :
calculer une quantité estimée de carburant à consommer sur la base de la distance calculée ; et
calculer un coût en carburant correspondant sur la base des informations connexes au prix des carburants et de la quantité estimée de carburant.

7. Procédé selon la revendication 6, dans lequel
les informations connexes aux coûts comprennent en outre des informations connexes aux péages de chaque itinéraire ; et
l'étape de calcul d'un coût associé à chaque itinéraire inclut l'étape consistant à ajouter les informations connexes aux péages au coût en carburant calculé.

8. Dispositif (100) comportant :
une unité d'affichage (160) ;
un récepteur de signaux de radiodiffusion (120) configuré pour recevoir des signaux de radiodiffusion comportant des informations connexes au trafic et des informations connexes aux coûts ;
une unité d'extraction d'informations (130) configurée pour extraire les informations connexes au trafic et les informations connexes aux coûts à partir des signaux de radiodiffusion reçus ;
une unité d'entrée (170) configurée pour recevoir une première position et une seconde position et pour recevoir une demande d'informations concernant un itinéraire de navigation ; et
un contrôleur (150) configuré pour
identifier au moins un itinéraire menant à la seconde position à partir de la première position ;
calculer un coût associé à chaque itinéraire dudit au moins un itinéraire sur la base d'informations connexes au trafic et d'informations connexes aux coûts correspondantes ; et
afficher au moins un coût calculé.

9. Dispositif selon la revendication 8, dans lequel
la première position est une position en cours ou une position de départ, et
la seconde position est une destination ou une position intermédiaire.

10. Dispositif selon la revendication 8 ou 9, dans lequel le contrôleur est configuré pour
calculer une distance et un temps requis pour atteindre la seconde position à partir de la première position pour chaque itinéraire dudit au moins un itinéraire sur la base des informations connexes au trafic correspondantes ; et
afficher au moins une distance calculée et un temps calculé.

11. Dispositif selon la revendication 8, 9 ou 10, comportant en outre :
une mémoire (140) configurée pour stocker des informations connexes au véhicule, dans lequel
le contrôleur est configuré pour déterminer des informations connexes à la consommation de carburant correspondantes aux informations connexes au véhicule dans la mémoire.

12. Dispositif selon la revendication 11, dans lequel les informations connexes au véhicule comportent des informations connexes à la cylindrée et des informations connexes à l'âge du véhicule.

13. Dispositif selon la revendication 11 ou 12, dans lequel
le contrôleur est configuré pour calculer une distance et un temps requis pour atteindre la seconde position à partir de la première position pour chaque itinéraire dudit au moins un itinéraire sur la base des informations connexes au trafic correspondantes ;
les informations connexes aux coûts comprennent des informations connexes au prix des carburants ; et
le contrôleur est configuré pour
calculer une quantité estimée de carburant à consommer sur la base de la distance calculée ; et
calculer un coût en carburant correspondant sur la base des informations connexes au prix des carburants et de la quantité estimée de carburant.

14. Dispositif selon la revendication 13, dans lequel
les informations connexes aux coûts incluent en outre des informations connexes aux péages de chaque itinéraire ; et
le contrôleur est configuré pour calculer le coût associé à chaque itinéraire en ajoutant les informations connexes aux péages au coût en carburant calculé.
